# EUROPEAN PATENT APPLICATION

(11) **EP 1 365 583 A2**
(43) Date of publication of application: **26.11.2003**
(21) Application number: 03290999.6
(22) Date of filing: 24.04.2003
(51) Int. Cl.: H04N 5/445, G06F 17/30

(54) **Process for navigation by displaying a document, receiver implementing the process, and graphical interface for the presentation of the process**

(30) Priority: 30.04.2002 FR 0205418
(71) Applicant: Thomson Licensing S.A., 92648 Boulogne Cedex (FR)
(72) Inventor: Hiron, Franck, 35220 Chateaubourg (FR); Grasland, Izabela, 35580 Guichen (FR); Maetz, Yves, 35520 Melesse (FR); Chevallier, Louis, 35250 La Meziere (FR); Shao, Jiang, 35000 Rennes (FR)
(74) Representative: Kohrs, Martin

(57) **Abstract**

The present invention relates to a process for navigation within a set of multimedia documents with the aid of a user interface: the navigator. A current document is firstly activated. Next, a descriptive data item indicative of this document is demarcated. When the user activates this descriptive data item, the navigator displays a new document. This new document possesses in common at least the same descriptive data item as that activated by the user.

The invention also relates to a device able to execute a software navigation module, the said module making it possible to determine a document comprising at least the descriptive data item activated by the user.

The invention also relates to a graphical interface making it possible to view multimedia documents.

## Description

The invention relates to a process for navigation displaying a document, a receiver implementing the process, and a graphical interface for the presentation of the process, the document being extracted from a set of multimedia documents accessible with the aid of a multimedia receiver. The invention applies in particular in the case where descriptive data associated with the multimedia documents are available.

A user interface uses these descriptive data to formulate menus capable of being displayed on a television screen, thus allowing the user to choose the multimedia documents. Patent application FR96/09679 filed by the applicant describes a process for selecting television programmes and a device incorporating a graphical interface allowing the user to navigate around lists of programmes. The menus allow the user to ascertain the general content of an audiovisual program and thus to select it according to his tastes. The descriptive data, called "service information" in the standard relating to DVB-SI, are stored in a local database constantly updated as a function of the documents accessible by the user. The elements of the database are grouped together according to certain criteria defined by the documents provider and contained in the service information such as: topic, language, morality rating, etc.

With the growth in the number of audiovisual documents and broadcasting channels, the user can access a very large number of documents. Therefore, the search for documents with contemporary user interfaces may prove to be lengthy and onerous, since the user must search through a long list of documents. The size of the screen being limited, the latter shows only a part of this list, and the user must therefore go from one screen page to another if he wants to find the right document.

The introduction of digital networks has seen the appearance of means of bulk storage, digital TV decoders also permitting access to Internet type networks in the home, and very powerful graphical means associating the displaying of texts and of images. Tomorrow's user will be faced with a very considerable quantity of multimedia documents of various types, such as audio, videos, images, text, application/services, etc. The user interfaces must henceforth allow the user to navigate around such multimedia databases and to find the documents that the user wants, doing so in a powerful and user-friendly manner.

The document WO01/39494 (SILVA CARLOS) describes a terminal furnished with a navigation function for searching for documents originating from several sources. The terminal presents documents extracted from "virtual channels" which are diverse sources (digital channel of a broadcasting network, website, combination of several sources). It is possible, from one and the same document, by virtue of the links displayed, to fetch other documents - typically situated within different websites. This document teaches the running of a programme guide which will search for information originating from several sources, this information being used to form a menu window. This document does not teach that the decoder analyses the descriptive data indicative of the channels so as to calculate, locally, a link making it possible to access another element. Stated otherwise, the links according to this document are defined by the network and not by criteria specific to the terminal.

The document GB 2 326 746 from the company IBM describes a terminal making it possible to navigate through HTML pages. The links are calculated by the network, the user can on the basis of a keyword (hypertext) access a new list of articles containing this same keyword. The articles accessed are placed on the network by various authors. This document does not teach that the decoder analyses the descriptive data indicative of the channels so as to calculate, locally, a link making it possible to access another element. These two documents do not teach dynamic link calculation as a function of navigation at the level of the terminal.

The invention proposes a novel concept of dynamic user interface for navigation, which offers navigation and possibilities of searching for multimedia documents, which are more powerful and user-friendly, by fully exploiting the characteristics of the graphical interface.

To do this the invention proposes a process for navigation among a set of multimedia documents in a terminal furnished with a display device, the multimedia documents being associated with descriptive data comprising classification elements, the process is characterized in that it comprises the following steps executed at the level of the terminal:
a) displaying of the sheet of a current document;
b) activation by the user of a classification element displayed in a so-called link zone of the said sheet;
c) determination of at least one new document comprising at least the same classification element as that activated by the user, this document becoming the new current document;
d) displaying of the sheet corresponding to the new document determined in step c, the said sheet comprising the classification element activated by the user.

In this way, the process makes it possible to display a single sheet making it possible to give the user maximum information about the new current document. The user is not lost within a large available list of documents but has the particularly simple choice of continuing the navigation or of selecting the document suggested to him by the process. The activation of a classification element in a link zone triggers the appearance of a new sheet corresponding to a new document.

According to an improvement, the process comprises a step of determination of a list of documents comprising the same classification element as that selected by the user in step a) and a step of calculation of the number of classification elements in common between each document of the list and the current document. The new current document is that possessing the most classification elements in common with the current document. In this way, the process chooses the document closest to the current one.

According to another improvement, when several documents of the list have the same number of classification elements in common with the current document, the process then employs the profile of the user in order to decide between them. In this way, the document, which is best suited to the user's preferences, is suggested to him.

According to another improvement, the process comprises a global step of determination of all the documents accessible by the set of link zones of all the sheets corresponding to all the accessible documents. In this way, the entire set of links is calculated globally and independently of the navigation commands. The links all being calculated, navigation is then very fast. According to a variant embodiment, the links are calculated only for the sheet currently being displayed. According to another variant embodiment, the link in respect of navigation is determined following a command from the user and depends on the classification element selected by the user during this command. In this way, the computational power for determining the links is limited.

According to an improvement, the first document displayed depends on information previously entered by the user, an attribute or the profile of the user for example. According to another improvement, the process comprises a marking step making it possible to indicate to the user whether each link zone is or is not associated with a document.

The invention also proposes a multimedia receiver comprising a central unit, a means of receiving multimedia documents associated with descriptive data, the said descriptive data containing classification elements; characterized in that it comprises: a means of displaying a sheet for presenting a so-called "current" document comprising at least one zone containing a classification element, the selection of the classification element by a means of entry of a command activating a means of determination of a so-called "elected" document from a set of documents accessible from the receiver, the means of display then displaying the sheet corresponding to the elected document, the elected document comprising at least one classification element in common with the current document.

The subject of the invention is also a graphical interface for the selection and the presentation of audiovisual programs; characterized in that it consists of a sheet for presenting an audiovisual document comprising a document identification zone and at least one so-called link zone, the activation of this link zone selecting one single other audiovisual document.

Other characteristics and advantages of the invention will now become apparent with more details within the framework of the description, which follows of exemplary embodiments given by way of illustration while referring to the appended figures, which represent:

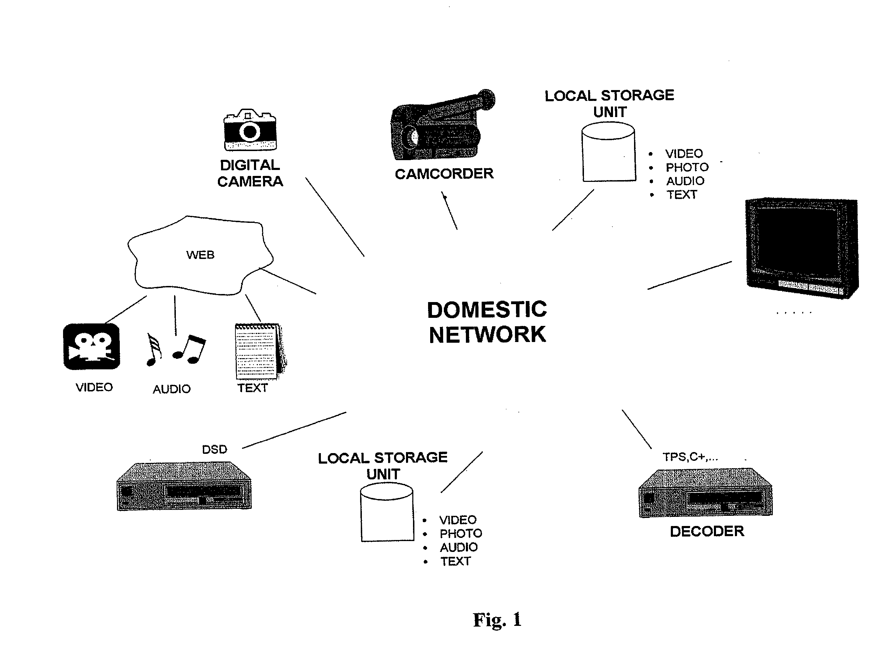

- Figure 1 depicts a structure of a domestic network connected to various multimedia apparatuses for the implementation of the invention,

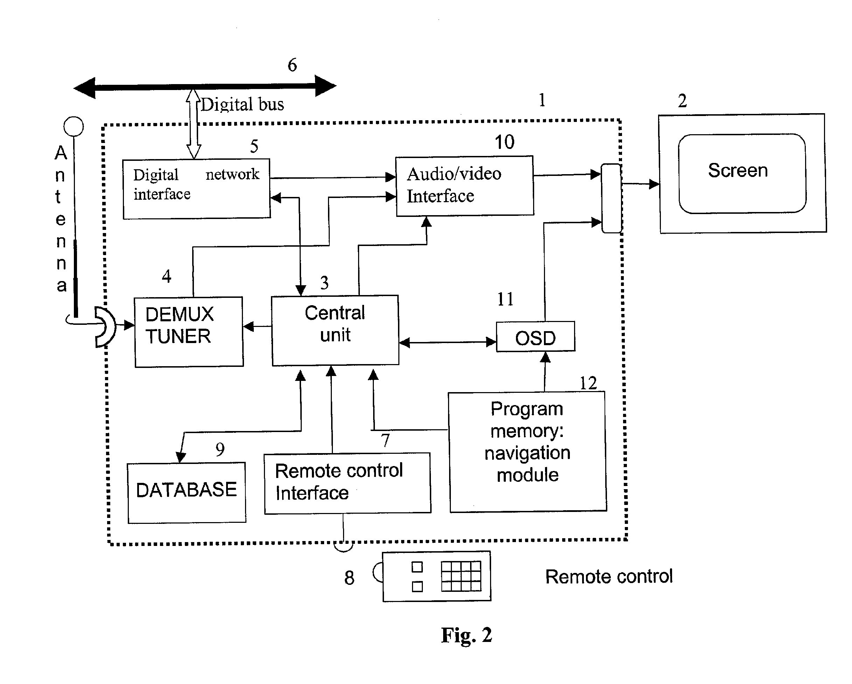

- Figure 2 is a block diagram of a multimedia receiver for the implementation of the invention,
- Figure 3 is a schematic showing the various links and levels of the data associated with the audiovisual documents,
- Figure 4 is a schematic representing navigation links existing between audiovisual documents,
- Figure 5 illustrates a first variant embodiment, in which the links are calculated independently of the display,
- Figure 6 illustrates another variant embodiment in which the links are calculated when the document is displayed,
- Figure 7 is an exemplary flowchart of the main steps performed for the calculation of the links allowing the navigation according to the invention,
- Figure 8 is another exemplary flowchart of the main steps performed for the calculation of the links allowing the navigation according to a simplified embodiment of the invention,
- Figure 9 is an exemplary flowchart of the main steps performed for the determination of the highlighting of the descriptive data according to the invention,
- Figures 10a, 10b, 10c are exemplary screen views in the course of a navigation sequence according to the invention.

The manner of operation of a multimedia receiver 1 furnished with a display device 2 will be described first. The receiver comprises a central unit 3 linked to a programme memory 12, and an interface 5 for communication with a high bit rate local digital bus 6 making it possible to transmit audio/video data in real time. This network is for example an IEEE 1394 network. The receiver can also receive audio/video data from a broadcasting network through a reception antenna associated with a demodulator 4. The receiver furthermore comprises an infrared signal receiver 7 for receiving the signals from a remote control 8, a memory 9 for storing a database, and audio/video decoding logic 10 for generating the audiovisual signals sent to the television screen 2. The remote control is furnished with at least the ↑, ↓ direction buttons and with buttons: "OK" and "Back", whose function we shall see later.

The receiver also comprises a circuit 11 for displaying data on the screen, also often called an OSD circuit, standing for "On Screen Display". The OSD circuit 11 is a text and graphics generator which enables menus, pictograms (for example, a number corresponding to the station being viewed) to be displayed on the screen and which makes it possible to display the navigation menus in accordance with the present invention. The OSD circuit is supervised by the Central Unit 3 and a navigator 12. The navigator 12 is advantageously embodied in the form of a program module recorded in a read-only memory. It may also be embodied in the form of a special-purpose circuit of ASIC type for example.

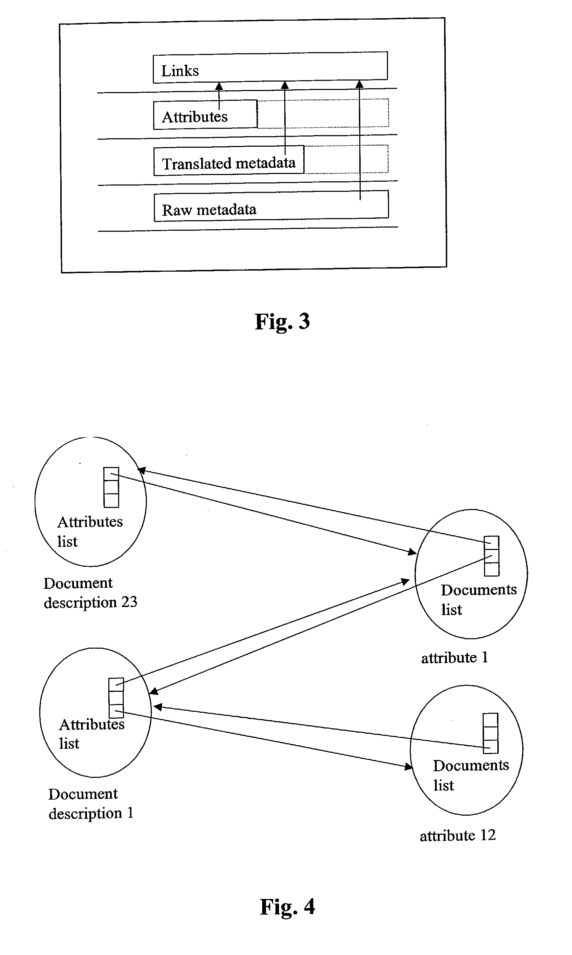

The digital bus 6 and/or the broadcasting network send the receiver data comprising multimedia documents and data descriptive of these documents. These data originate either from a broadcasting network, or from the digital network 6. The descriptive data comprise classification elements also called "attributes", accessible multimedia documents. The descriptive data are for example contained in the service information specified in the DVB-SI standard. These data are stored in the database of the memory 9 of the receiver and are continuously updated. The navigator then extracts the information from this database and processes it so as to produce the navigation menus displayed on the screen.
As shown by Figure 3, it is possible to distinguish three levels of descriptive data indicative of the documents:

1st level (the lowest in the scale): the raw metadata: this is information such as collected by the system from the data sources. This information therefore turns up according to variable formats, standardized or otherwise. Mention may be made of the DVB standard for broadcast information (satellite, digital hertzian, cable in Europe), as well as any schemes specific to multimedia databases (based for example on the MPEG7 standard).

2nd level: the translated metadata. These are the raw metadata translated into a single scheme specific to our system. This "pivot" scheme envisages a predetermined number of metadata with a precise meaning for each. As metadata may be mentioned the summary, the list of actors, the title, the genre (making reference to a specific classification), the cover or the jacket. Not all these fields are necessarily filled in depending on the origin of the documents. The translation may be direct in case of a one for one correspondence with the original scheme. Finally, certain fields may be the result of an automatic synthesis/merge carried out by the system using several raw metadata.

3rd level (the highest in the scale): the attributes. The attributes are information presumed to be easily "readable" by the end user. They therefore carry more semantic value than the metadata. They are the result of calculation applied to the metadata, which take account of data such as thesauruses (dictionary), the user profile or of other a priori data such as the shape of human faces. These calculations apply analysis algorithms, which depend on the type of the attributes (images, video, free text, formatted text) and try to extract pertinent information. By way of exemplary attributes, mention may be made of: recognized faces (of the family or of famous personalities), concepts, places.

A fourth level, the so-called link level, allowing the user to navigate from one document to another based on certain descriptive data can be schematised.

In the exemplary embodiment which follows, the navigation program features six types of attributes contained in the descriptive data: the language, the topic, the subtopic, the source, the producer and the actors. Here are some examples of attributes fixed by the supplier of documents for classifying the documents available:
- language: English, French, German, Italian, Arabic, others;
- topic: film, news, documentary, sport, game/show;
- subtopic:
   - film: {adventure, drama, erotic, crime, fiction, others};
   - news: {press, radio, weather, stock market, sport, other};
   - documentary: {general, nature, culture, social, history};
   - game/show: {general, variety, circus, Talk Show, circus};
   - sport: {general, football, tennis, basketball, athletics, swimming};
- source: TPS, Satellite Channel, DVD showroom, video recorder, Web.
- producer: Spielberg, Coppola, Besson, Kubrick, Truffaud.
- actor: {John Wayne, Jennifer O'Neill, Lee Marvin, ...}.

Depending on the computational power of the receiver, the latter can also take into account the title and the summary, which are contained in identified fields of descriptive data. The title and the summary consist of character strings that can be processed digitally. For example, the title of the film "Les dents de la Mer" contains the significant words "dents" and "Mer". The significance of these words generally makes it possible to identify one or more subject(s) dealt with in the document. The receiver filters the character strings and retains only the significant words. The filtering is performed with the aid of a list of the words, which possess a specific semantic content. If a word of the title or of the summary is present in the list, then it is retained, otherwise it is ignored. The receiver associates a sixth type of attribute called "title and summary" with the five previously mentioned so as to classify each document. Depending on the titles and the content of the summaries, the filtering makes it possible to extract one or more attributes as a function of a list specific to the receiver. It should be noted that such a filtering may eliminate all the attributes, in this case attributes of this type are ignored.

An important aspect of the present invention is the fact that the links are calculated locally at the receiver level. With the aid of the network, the receiver has access to a vast database and hence to documents in this base. The navigation module marshals all the descriptive information originating from various sources and processes it so as to define navigation links making it possible on the basis of one document to select therefrom at least one other.

The moment of the calculation of links can be effected according to three variants: the first consists in calculating the links continuously (or at regular moments) and hence independently of the navigation actions performed by the user. For the other two variants, the links are calculated in the course of the displaying of the document presentation sheet.

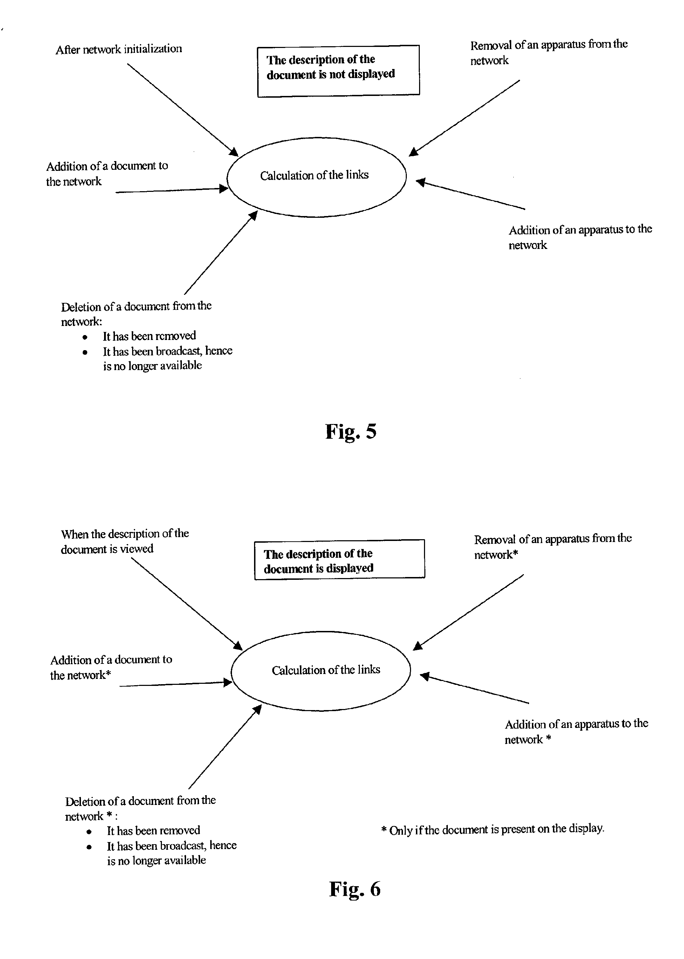

Figure 5 illustrates the calculation of links according to a first variant. The calculation of the links is not linked to the displaying of a document according to the navigation process. The calculation is instigated through at least one of the following actions:
- initialisation of the network, once the network has recognized the various apparatuses, the receiver possessing the navigation module interrogates the other apparatuses so that they send it the data descriptive of the documents, which they can provide.
- addition of an apparatus to the network, the receiver possessing the navigation module interrogates this apparatus and asks it to forward it the data descriptive of the documents, which it has.
- removal of an apparatus from the network, the receiver possessing the navigation module then removes the references of the data descriptive of the documents that this apparatus was able to provide.
- addition of a document available from an apparatus of the network. The apparatus which receives the new document (a DVD reader for example) informs the network thereof, the receiver possessing the navigation module receives the information and incorporates the data descriptive of this new document into its memory with the other descriptive data.
- removal of a document available from an apparatus of the network. The apparatus which provided this document (a DVD reader for example) informs the network thereof, the receiver possessing the navigation module receives the removal information and deletes the descriptive data linked with this document from its memory.
- action of a timer, the program for calculating links is run at regular moments, the time intervals being supervised by the timer.

The data descriptive of the documents may be accessible via a network or be stored in a database local to the receiver. This database is made responsible for keeping the image of all the documents accessible on the network up to date.

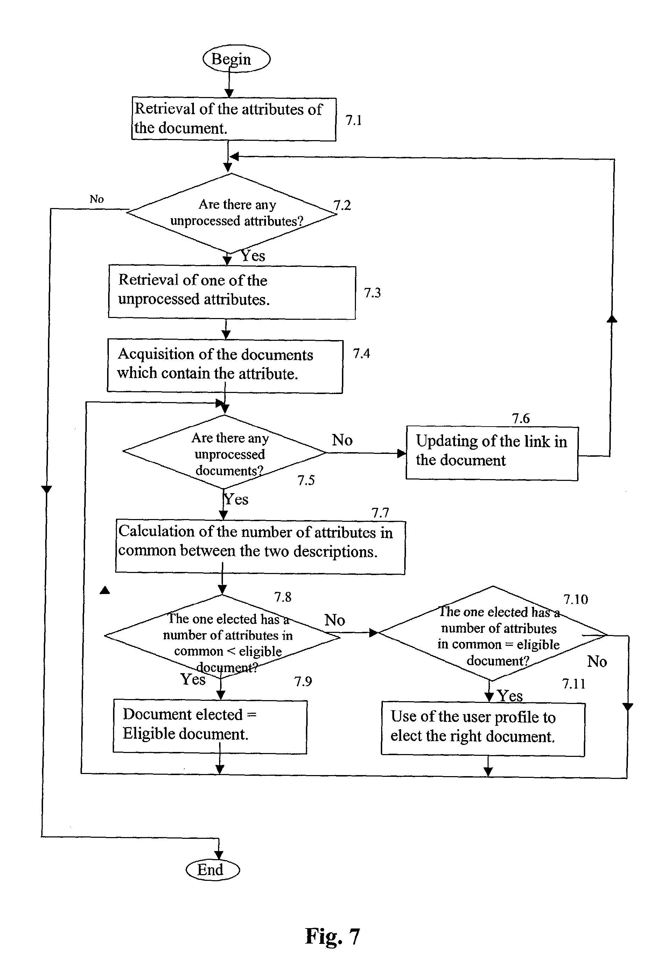

Figure 6 illustrates the calculation of links according to a second variant. The calculation of the links is performed during the displaying of the sheet associated with a document according to the navigation process. When the sheet is present on the screen, the calculation takes into account the following events:
- addition of an apparatus to the network (a DVD reader or a video recorder for example), the receiver possessing the navigation module interrogates this apparatus and asks it to forward it the data descriptive of the documents which it has.
- removal of an apparatus from the network (a DVD reader or a video recorder for example), the receiver possessing the navigation module then removes the references of the data descriptive of the documents that this apparatus was able to provide.
- addition of a document available from an apparatus of the network, for example, when a medium containing an audiovisual document is inserted into a DVD reader.
- removal of a document available from an apparatus of the network, when a medium containing an audiovisual document is withdrawn from a DVD reader.

A third variant, which will be made explicit subsequently, consists in performing only the calculation of the link corresponding to the navigation command performed. In contradistinction to the other variants, there is no need to calculate the entire set of links in a document, but only that one which will enable the navigation command to be executed.

Figure 7 depicts an exemplary flowchart of a program making it possible to calculate links associated with a so-called "current" document, and to elect a document associated with each link zone.

In a first step, all the attributes of the current document are marshalled (step 7.1). Next all the attributes will be processed individually. Step 7.2 consists in testing whether all the attributes of the current document have been processed. In this case the program is terminated. Step 7.3 consists in choosing an as yet unprocessed attribute "Atti". Next the program will search for the documents, which contain the attribute (step 7.4). According to a first variant in the course of this step, the program tests all the available documents and determines for each of them whether it possesses the attribute chosen in step 7.3. If such is the case, the identifier of the document is placed in a list List_Atti associated with the chosen attribute. According to a second variant, the program will retrieve the identifiers of the documents linked with the chosen attribute (see Figure 4) by deleting the identifier of the current document from the list, and therefore thus construct a list of identifiers (List_Atti) of documents linked with the attribute Atti. On completion of step 7.4, the list List_Atti of the so-called "eligible" documents is obtained. Next, all the eligible documents will be processed and the program will determine which one is to be associated with the attribute Atti. In step 7.5, the program tests whether all the eligible documents have been processed, thus all the eligible documents are analysed. In the first pass through step 7.5, there is no elected document since the program has not yet begun to analyse the eligible document. Let us assume that there is still at least one unprocessed eligible document, the program jumps to step 7.7 where the number of attributes in common between the data descriptive of this unprocessed document and the current document is calculated. In step 7.8, if the document currently being processed possesses more attributes in common with the current document than the elected document, then this document becomes the elected document (step 7.9). During the first pass through this step, the program assigns the elected document title to the document in progress since there is no elected document at this moment.

Steps 7.10 and 7.11 are optional in a simplified version of the present invention. If the test in step 7.8 is negative, the program tests whether the document currently being processed possesses the same number of attributes in common with the current document as the elected document. If such is not the case, then the number of attributes in common is less than that of the elected document, and the program loops back to step 7.5 so as possibly to analyse a new eligible document. If such is the case, then it is necessary to decide between these two documents which posses the same number of attributes in common with the current document. To do this, in step 7.11, the program uses the profile of the user to determine which of the two documents is most apt to interest the user. It is this document, which then becomes the elected document. On completion of steps 7.9 and 7.11, the program loops back to step 7.5. When there are no longer any eligible documents to be processed, the program exits the loop and jumps to step 7.6 to associate the elected document with the attribute Atti. Next the program continues to step 7.2 to analyse other attributes of the current document.

At the end of execution of the program schematised by this flowchart, the receiver possesses in memory a table comprising attributes displayed in a link zone and each associated with an elected document identifier. In this way, when the user activates a link zone and therefore the classification element appearing in this zone, the navigation program searches for the identifier of the corresponding document and displays the sheet of this document.

The flowchart of Figure 7 makes it possible to implement the first and the second variant embodiments of the present invention illustrated by Figure 5. The calculation of the links is performed independently of the navigation actions, and all the links are calculated in one go.

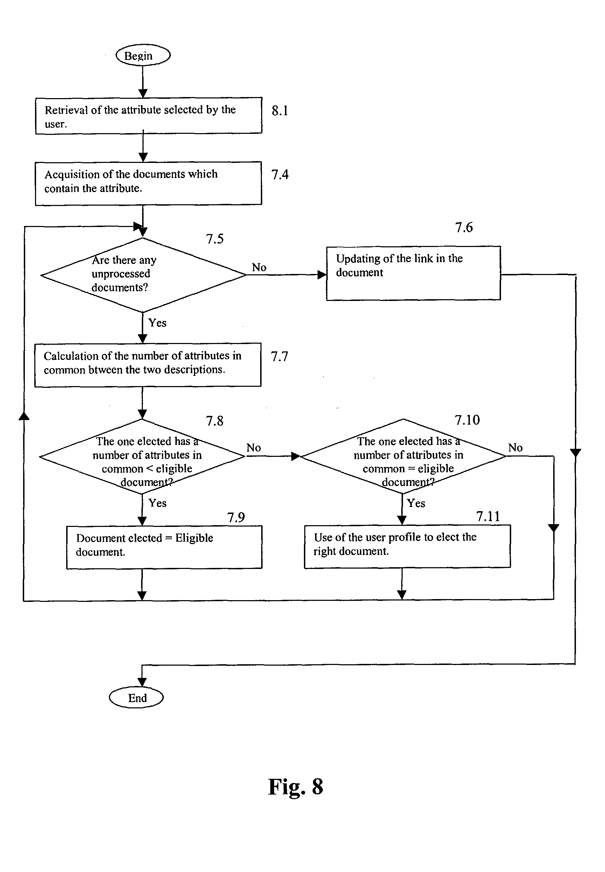

The flowchart of Figure 8 is a simplification of the flowchart of Figure 7: steps 7.2, 7.3 are removed and the program goes directly from step 7.1 to step 7.4 and stops on completion of step 7.6. According to this flowchart, the attribute selected by the user is an input parameter and, in step 8.1, the program retrieves this attribute. Next, the program will search for the documents, which contain the attribute (step 7.4). The two variants described above are applicable. Thereafter, in step 7.5, the program tests whether all the eligible documents have been processed, in this way all the eligible documents will be analysed. When there are no more documents to be processed, the program goes to step 7.6 which update the link to the elected document, and then the program stops.

This flowchart makes it possible to implement the third variant. In this way, the multimedia receiver calculates only the link required for navigation in response to the user's command. This variant has the advantage of requiring less time for calculating the links than the other two variants.

An improvement consists in alerting the user to the existence of a link and hence to a document associated with a link zone. Specifically, the link zones are defined by the producer of the sheet, and the content of certain link zones does not always make it possible to find a document making it possible to navigate. To avoid the user having to select a link zone, which will not allow him to navigate, each link zone is visually marked. For example, all the link zones, which associate a document, have a highlighted text. Other markings are also possible: enhanced brightness, flashing, a particular colour, etc.

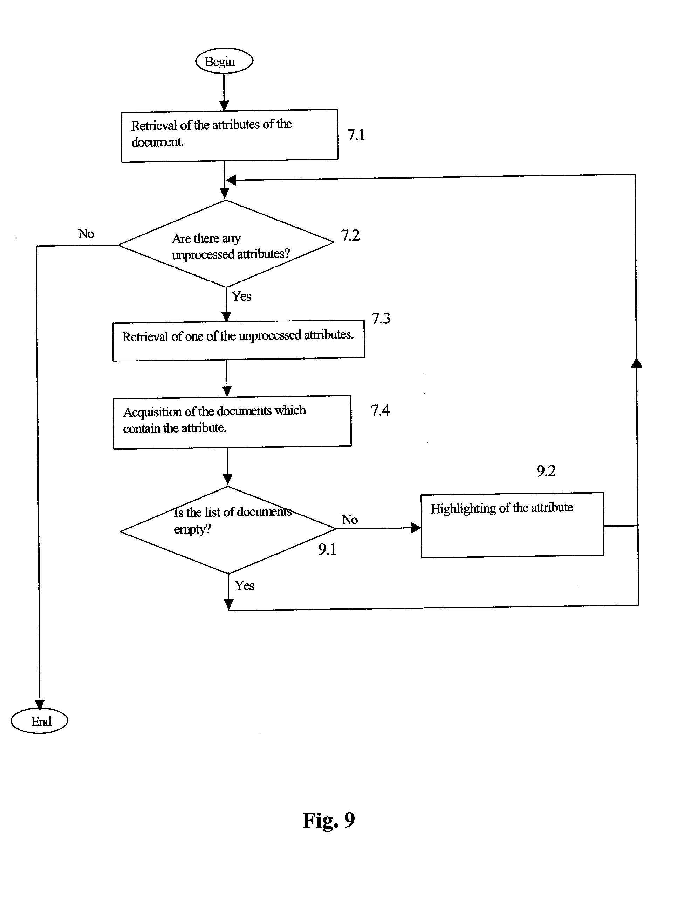

The flowchart of Figure 9 makes it possible to implement this improvement. Steps 7.1 to 7.4 of the flowchart of Figure 7 are retained, these steps make it possible to scan all the documents and to formulate the list of documents, which possess the attribute currently being analysed. In step 9.1 the program tests whether the list formulated in step 7.4 is or is not empty. If the step is not empty, there exists at least one document, which makes it possible to navigate from this link zone. In this case, in step 9.2, the program marks this link zone, for example by highlighting the attribute featured in the link zone. Otherwise, the link zone corresponding to this attribute is not marked. When beginning the execution of the routine represented by this flowchart, by default no link zone is marked. The program corresponding to this flowchart is executed following the displaying of the sheet. It can thereafter be run regularly or upon the events presented in Figure 6.

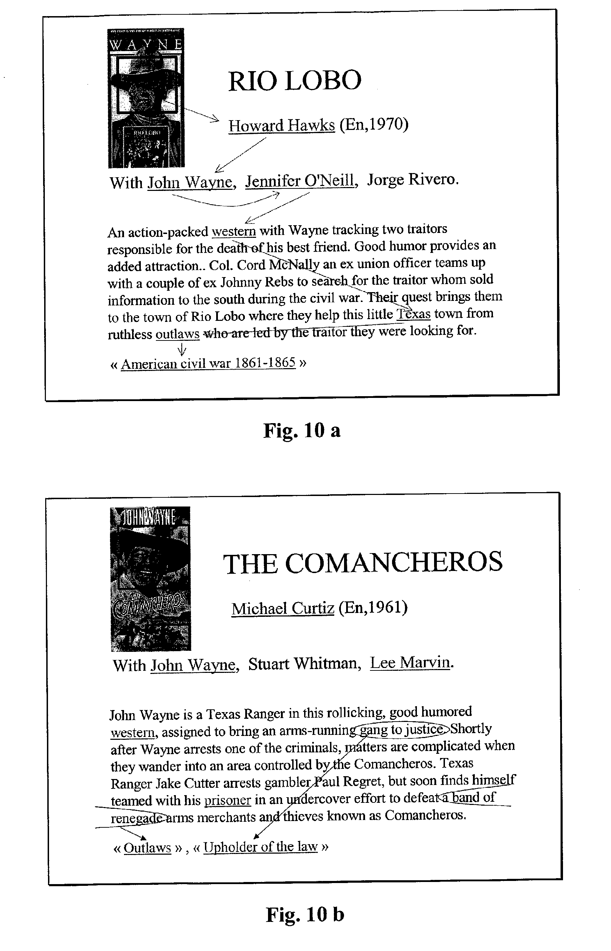

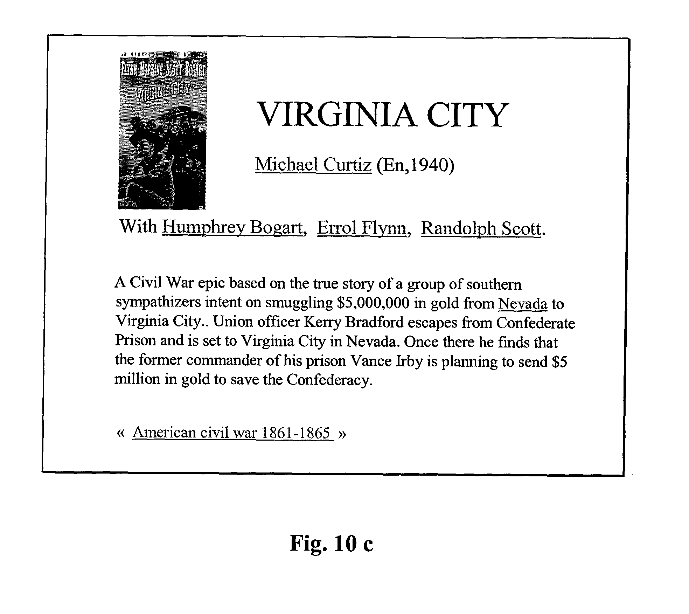

Figures 10a, 10b and 10c present exemplary screen views according to the display process. The screen exhibits the form of a sheet associated with a document. This sheet comprises:
- a title zone identifying the document,
- an image zone showing an image characteristic of the document,
- a plurality of text zones linked respectively with a plurality of types of different attributes. In the example of Figure 10a: three zones: the director of the document ("Howard Hawks"), a list of actors ("John Wayne, ....") and a summary zone.

Other zones which are not represented in Figure 10a may be incorporated into the document presentation sheet: the broadcasting station, the moment of availability of the document, the language (or possibly the languages available), the type of document (audiovisual, audio, still image, interactive programme, etc.).

Link zones are arranged on the document presentation sheet. These zones are demarcated by underlining (as shown by Figure 10a), enhanced brightness, change of colour, etc. If the user interface does not have a pointer, the first link zone (the one nearest the top left of the screen for example) is automatically selected, this is the current link zone. It is particularly demarcated by flashing or any other means enabling this zone to be distinguished from the others and the user's attention to be attracted. When the user presses the "OK" button, he selects the current link zone, and the display module screens the view sheet associated with the attribute displayed in this current link zone. If the user interface has a pointer: an arrow for example moving with the aid of the direction buttons or of a pointing means such as a mouse, the user places the pointer on the link zone that he wants to select and presses the select button.

The navigation module offers the user several commands for going from one document to another.

Navigation from one document to another is performed with the aid of a sheet of a document comprising link zones. An example of such a sheet is presented in Figure 8. This sheet is displayed on calling up the navigation program. The starting document which is displayed first can be chosen in several ways:
- Preferably, the user can ask the application to offer him a document corresponding to a specified attribute, a "Western" for example. The application instigates the search and displays the sheet of the first document possessing this attribute,
- A variant consists in the user entering several keywords. The application will instigate the search and displays the sheet of the document possessing these keywords in its descriptive data.
- A variant consists in the user choosing a document with the aid of an EPG. Thereafter, he runs the navigation application which will initially formulate the sheet of this document.
- Another variant consists in the navigation application being run when an audiovisual event is displayed. The application then takes this event as starting document.
- Another variant consists in taking the profile of the user into account. The application then searches for the document whose attributes are closest to those making up the profile of the user.

As stated previously, the presentation sheet contains link zones that can be individually selected and activated. The buttons available to navigate are:
- the "BACK" button which makes it possible to return to the previous screen and hence to the previous sheet,
- the two direction buttons down arrow (↓) and up arrow (↑) which make it possible to select a link zone by moving the zone demarcating the so-called "current" link.
- the "OK" validation button which makes it possible to activate the previously selected link zone and thus to make the document associated with this zone appear.

Here is an example of a navigation showing the various displays as a function of the commands performed by the user. Let us assume that the document "RIO LOBO" is the starting document, the sheet represented in Figure 10a is then displayed. Here are the link zones and the attributes contained in these zones, which make it possible to access other sheets:
- the director Howard Hawks,
- the actors John Wayne (link to his photo + link to the name in the text), Jennifer O'Neill,
- in the summary, the following words: western, Texas, and Outlaws and the concept "American civil war 1861-1865".

If only the left and right arrows are used, the order of selection of the link zones is indicated by the arrows.

Here are the various commands and their action, which are available to the user when the sheet is displayed.
- DOWN button (↓): focuses downwards and from left to right on the same horizontal line
- UP button (↑): focuses upwards and from right to left on the same horizontal line
- "OK" button: validates the link, which has the focus and displays the corresponding screen. Here, it is assumed that the user validates the actor link "John Wayne": this action displays another sheet entitled "Les Comancheros"

Following this last validation action on the attribute "John Wayne", the display program will search forthwith for the information of the sheet entitled "The comancheros" described in Figure 10b, which presents the document offering the most similarities with the actor "John Wayne". The sheet of the new document then appears, the element "John Wayne" is demarcated, it may be activated directly. Its activation will not necessarily bring about a return to the displaying of the previous sheet, but possibly a third, which also possesses the attribute "John Wayne".

Here are the link zones and the attributes contained in these zones, which make it possible to access other sheets from this new current sheet:
- the director Michael Curtiz,
- the actors John Wayne (link to his photo + link to the name in the text), Lee Marvin,
- in the summary, the following words: western, prisoner, and the concepts "Outlaws", "Upholder of the law".

Here are the various commands and their action which are available to the user when the sheet "THE COMANCHEROS" is displayed.
- DOWN button (↓): focuses downwards and from left to right on the same horizontal line
- UP button (↑): focuses upwards and from right to left on the same horizontal line
- "OK" button: validates the link, which has the focus and displays the corresponding screen. Here, it is assumed that the user validates the actor link "Michael Curtiz": this action displays another sheet entitled "Virginia CITY"
- BACK button (¬): returns to the previous screen: RIO LOBO

Following this last validation action on the attribute "Michael Curtiz", the display program will search forthwith for the information of the sheet entitled "Virginia CITY" described in Figure 10c, which presents the document offering the most similarities with the director "Michael Curtiz".

Although the present invention has been described with reference to the particular embodiments illustrated, it is in no way limited by these embodiments, but is so only by the appended claims. It will indeed be noted that any means of navigation equivalent to the direction buttons is applicable for the implementation of the invention.

## Claims

1. Process for navigation among a set of multimedia documents in a terminal furnished with a display device, the multimedia documents being associated with descriptive data comprising classification elements, the process is **characterized in that** it comprises the following steps executed at the level of the terminal:
a) displaying of the sheet of a current document;
b) activation by the user of a classification element displayed in a so-called link zone of the said sheet;
c) determination of at least one new document (7.4, 7.5, 7.6, 7.7, 7.8, 7.9) comprising at least the same classification element as that activated by the user, this document becoming the new current document;
d) displaying of the sheet corresponding to the new document determined in step c, the said sheet comprising the classification element activated by the user.

2. Process for navigation according to Claim 1, **characterized in that** step c) furthermore comprises the following consecutive steps:
c1) determination of a list of documents (7.4) comprising the same classification element as that activated by the user in step a);
c2) calculation of the number of classification elements in common between each document of the list and the current document;
c3) determination of the new current document as being that possessing the most classification elements in common with the current document.

3. Process for navigation according to Claim 2, **characterized in that** if in the course of step c2 two documents of the list have the same number of classification elements in common with the current document, then step c3 takes into account the profile of the user, that of the two documents whose classification elements correspond best to the profile of the user being that determined on completion of step c3.

4. Process for navigation according to any one of Claims 1 to 3, **characterized in that** it comprises a global step of determination of all the documents accessible by the set of link zones of all the sheets corresponding to all the accessible documents, the said global step being executed independently of the commands performed by the user.

5. Process for navigation according to Claim 4, **characterized in that** the global step of determination is instigated upon an event taken from the set of the following events: initialisation of the network, addition of an apparatus to the network, removal of an apparatus from the network, addition of an accessible document, removal of an accessible document, end of a timeout.

6. Process for navigation according to any one of Claims 1 to 3, **characterized in that** it comprises a step of determination of all the documents selectable by the set of link zones of the sheet corresponding to the document just displayed.

7. Process for navigation according to Claim 6, **characterized in that** the determination step is instigated also upon an event taken from the set of the following events: initialisation of the network, addition of an apparatus to the network, removal of an apparatus from the network, addition of an accessible document, removal of an accessible document, end of a timeout.

8. Process for navigation according to any one of Claims 1 to 3, **characterized in that** step c is instigated following step b, and consists in determining a new document comprising the same classification element as that activated by the user in step b, this new document becoming the new current document.

9. Process for navigation according to any one of the preceding claims, **characterized in that** it comprises a step of determining a first document, the determination of the first document taking into account information previously entered by the user.

10. Process for navigation according to any one of the preceding claims, **characterized in that** it comprises a step of marking the link zones consisting in graphically distinguishing the zones, which are or are not associated with a document.

11. Multimedia receiver (1; 2) comprising a central unit, a means (5; 4) of receiving multimedia documents associated with descriptive data, the said descriptive data containing classification elements; **characterized in that** it comprises: a means (10, 11, 12, 2) of displaying a sheet for presenting a so-called "current" document comprising at least one zone containing a classification element, the selection of the classification element by a means of entry (8) of a command activating a means of determination (3, 12) of a so-called "elected" document from a set of documents accessible from the receiver, the means of display then displaying the sheet corresponding to the elected document, the elected document comprising at least one classification element in common with the current document.

12. Multimedia receiver according to Claim 11, **characterized in that** it comprises a means of determination of a list of documents (7.4) comprising the same classification element as that activated by the user; a means of calculation of the number of classification elements in common between each document of the list and the current document; and a means of determination of the elected document as being that possessing the most classification elements in common with the current document.

13. Multimedia receiver according to Claim 12, **characterized in that** it comprises a second means of determination for activating a document, the second means being activated when at least two documents of the list have the same number of classification elements in common with the current document, the means of determination selects the document from among the documents which possess the most classification elements in common with those making up the profile of the user.

14. Multimedia receiver according to any one of Claims 11 to 13, **characterized in that** the means of display of a sheet comprises a means of marking a zone of the screen depending on whether the classification element displayed in this zone is or is not associated with an elected document.

15. Graphical interface for the selection and the presentation of audiovisual programs; **characterized in that** it consists of a sheet for presenting an audiovisual document comprising a document identification zone and at least one so-called link zone, the activation of this link zone selecting one single other audiovisual document.

16. Graphical interface according to Claim 14, **characterized in that** it comprises a graphical indication for marking a link zone, the graphical indication representing the fact that this zone is associated with another document.
